# EUROPEAN PATENT SPECIFICATION

(11) **EP 2 982 957 B1**
(45) Date of publication and mention of the grant of the patent: **29.11.2017**
(21) Application number: 14180237.1
(22) Date of filing: 07.08.2014
(51) Int. Cl.: G01M 15/14, G01L 5/12

(54) **Device for a rotor thrust measurement, turbine and method to measure a rotor thrust of a turbine**
Vorrichtung für Rotorschubmessung, Turbine und Verfahren zur Messung der Rotorschubkraft einer Turbine
Dispositif pour une mesure de butée de rotor, turbine et procédé pour mesurer une poussée de rotor d'une turbine

(43) Date of publication of application: 10.02.2016
(73) Proprietor: Siemens Aktiengesellschaft, 80333 München (DE)
(72) Inventor: Korista, Milan, 61800 Brno (CZ); Potmesil, Tomas, 69301 Hustopoce (CZ)

(56) References cited:
- EP-A1- 1 818 661
- EP-A1- 2 317 295
- EP-A2- 1 014 064
- EP-A2- 1 327 750
- EP-A2- 2 549 254
- JP-A- 2011 169 418
- US-A- 3 763 700
- US-B1- 6 360 616

## Description

The present invention is related to a device for a rotor thrust measurement of a turbine, the turbine comprising a rotor and a housing, the device comprising an evaluation unit. Further, the present invention is related to a turbine comprising a rotor, a housing and a device for a rotor thrust measurement and to a method to measure a rotor thrust of a turbine.

Turbines are well known in present technological applications. In turbines, chemical and/or thermal energy is converted in mechanical energy, especially rotational energy. For instance gas turbines are converting chemical energy stored in gaseous or fluid fuels by burning these fuels, steam turbines are producing mechanical energy out of the thermal energy contained in steam.

To produce the mechanical, especially rotational, energy, an axial flow of fluid through the turbine is used, for instance combustion gas or steam. Stator blades inside the turbine are used to guide the fluid through the turbine, rotor blades fixed to a rotor of the turbine are impinged by the flow of fluid and set the rotor in rotational motion.

However, due to the impingement of the flow on the rotor blades, an axial thrust of the rotor of the turbine is created. This axial thrust puts pressure on a bearing of the rotor of the turbine, especially on a thrust bearing. To protect the bearing and all other parts of the turbine against a damage caused by the axial thrust, safety margins for the operation of the turbine have to be observed. These safety margins have to be established in a large extent, especially due to the fact that the dimension of the axial thrust is not known.

European Patent Application 1 818 661 A1 discloses an apparatus for measuring bearing thrust load. The apparatus is mounted onto a housing and comprises a load cell for measuring forces on the housing that are caused by rotor thrust. This apparatus has the disadvantage that thrust values are measured

United States Patent 3 763 700 A discloses a thrust indicator for a steam turbine which measures the axial force of a thrust bearing housing against an outer casing of the steam turbine during rotation of the rotor. The indicator comprises hydraulic load cells that are configured for carrying thrust load of the rotor. The indicator has the disadvantage that the hydraulic load cells have to be configured for carrying thrust while not pressurized. Consequently, the hydraulic load cells are of rugged construction and therefore quite expensive.

It is an object of the present invention to solve the aforesaid problems at least partly. In particular, it is an object of the present invention to provide a device for a rotor thrust measurement, a turbine and a method to measure a rotor thrust of a turbine, which allow a reduction of the safety margins of the operation of a turbine in respect to an axial thrust of the rotor.

The aforesaid problems are solved by a device for a rotor thrust measurement according to independent claim 1, a turbine according to claim 7 and a method to measure a rotor thrust of a turbine according to claim 9. Further features and details of the present invention result from the sub claims, the description and the drawings. Features and details discussed with respect to the device for a rotor thrust measurement can also be applied to the turbine and/or the method to measure a rotor thrust of a turbine and vice versa, if of technical sense.

According to a first aspect of the invention the aforesaid object is solved by a device for a rotor thrust measurement of a turbine, the turbine comprising a rotor and a housing. The device for a rotor thrust measurement according to the invention is characterized in that the device comprises a measurement body and an evaluation unit, wherein the measurement body comprises a first contact surface for contacting a first part of the turbine mechanically connected to the rotor, a second contact surface for contacting a second part of the turbine mechanically connected to the housing, at least one strain gauge mechanically connected to the measurement body and a first data connection between the at least one strain gauge and the evaluation unit.

A device for a rotor thrust measurement according to the invention is designed to be used in or with a turbine respectively. The turbine is a common turbine comprising a rotor and a housing. The rotor is supported inside the housing and can be set in a rotational motion by the impingement of an axial flow of a fluid, for instance combustion gas or steam, onto rotor blades fixed to the rotor. Due to the impingement, an axial rotor thrust is created. Therefore an axial force is acting on the rotor and a displacement and/or movement of the rotor in respect to the housing of the turbine is possible.

A device for a rotor thrust measurement according to the invention comprises a measurement body. It is essential according to the invention that this measurement body can be arranged between a first part of the turbine and a second part of the turbine, wherein the first part of the turbine is mechanically connected to the rotor of the turbine and the second part of the turbine is mechanically connected to the housing of the turbine. Due to the mechanical connection between the first part of the turbine and the rotor and the second part of the turbine and the housing respectively, a relative motion of the rotor in respect to the housing automatically results in a respective relative motion of the first and the second part of the turbine. For the contacting of the first and the second part of the turbine, the measurement body comprises a first and a second contact surface respectively. These contact surfaces can of course be adapted to the first and the second part of the turbine respectively, especially in surface appearance, shape and/or size. In addition, the contact between the contact surface and the respective part of the turbine can of course be established such that both strain and stress can be induced in the measurement body by a relative movement of the two parts of the turbine and therefore by a relative motion of the rotor and the housing of the turbine.

According to the invention, at least one strain gauge is mechanically connected to the measurement body. Of course, a larger number of strain gauges is recommended to enhance the precision of the measurement. Due to the mechanical connection to the measurement body, a strain or stress induced in the measurement body due to its connection to the first and the second part respectively creates a data signal, especially an electrical signal, in the strain gauge. This data can be transmitted via a first data connection to the evaluation unit of the device for a rotor thrust measurement according to the invention. This first data connection can be wire-bound and/or wireless. The evaluation unit can provide a computer, data storage, in- and output devices, etc. In the evaluation unit the received data are used to calculate the strain and stress distribution in the measurement body. This strain and stress distribution correlates without ambiguity to a relative movement of the first and the second part of the turbine and therefore to a relative movement of the rotor and the housing of the turbine. Such a relative movement is caused by an axial rotor thrust during an operation of the turbine. Therefor using a device for a rotor thrust measurement of a turbine according to the invention, this thrust can be measured during the operation of the turbine. It is therefore possible, to alter the operation mode of the turbine if the axial thrust is too high and causes a danger of damage done to a bearing of the rotor. Therefore safety margins can be reduced and due to that the region of allowed operation of the turbine can be increased. Further, since the rotor thrust changes due to fluid losses, for instance due to a filling of deposits inside the turbine, such losses can be identified using the rotor thrust measurement provided by the device for a rotor thrust measurement of a turbine according to the invention.

In a preferred embodiment of the invention, a device according to the invention is characterized in that the measurement body is a ring, especially a solid ring. It is especially preferred that the ring is enabled to enclose the rotor, especially in an axial symmetric way. A measurement with strain gauges along the complete circumference of the rotor is therefore possible. A solid ring, especially with a first and/or a second contact surface shaped as annulus, comprises a geometrical symmetry which lightens the measurement and the calculation of the strain and stress distribution. However, such a solid ring has disadvantages during the mounting. A ring split in several parts, for instance in halves, simplifies the mounting of such a measurement body but loses the advantage of the symmetry mentioned above. According to the planned field of application, the most suitable embodiment of a ring shaped measurement body can be chosen.

Further, a device according to the invention can be characterized in that the measurement body is fixed to the first and/or second part of the turbine using a split ring. Such a split ring can be put on a rotor shaft of the rotor even after the mounting of a bearing. Therefore, the measurement body, preferably likewise ring shaped, can be put around the rotor shaft in a loose manner and not until the mounting of a bearing of the rotor, it can be fixed to the first and/or second part of the turbine using the split ring. A very easy and versatile mounting of the measurement body can therefore be provided.

In an especially preferred embodiment of a device according to the invention it can be provided that the device comprises a temperature measurement device to measure the temperature of the measurement body and a second data connection between the temperature measurement device and the evaluation unit. Due to temperature effects the measurement body can be stretched or contracted. These effects are also measured by the at least one strain gauge. The temperature of the measurement body can be measured using the temperature measurement device. The measured temperature data can afterwards be transmitted to the evaluation unit using the second data connection. This second data connection can be wire-bound and/or wireless. In the evaluation unit, a consideration of a stretch and/or of a contraction of the measurement body due to changes in temperature can be calculated and afterwards considered during the calculation of a stress and strain distribution in the measurement body exclusively caused by an axial rotor thrust. For instance, a stress and strain distribution is calculated based on the measured temperature and this calculated distribution is subtracted from a stress and strain distribution calculated from the data provided by the at least one strain gauge. As a result a stress and strain distribution exclusively caused by the axial rotor thrust can be calculated. The precision of the calculated rotor thrust can therefore be enhanced.

Further, the device according to the invention can be characterized in that the measurement body comprises at least one hole, especially perpendicular to the at least one strain gauge. A strain gauge measures a deformation of a body it is fixed at. Using a hole in the measurement body, especially a hole perpendicular to the at least one strain gauge, the deformation of the measurement body can be enlarged. Accordingly, the strain gauges measure a larger deformation and therefore a more significant signal. The rotor thrust calculated based on the measurement of the strain gauges can therefore be carried out with an increased precision.

In an further advanced embodiment of a device according to the invention the at least one hole is a drilled hole. Drilling is a fast and at the same time very precise way to create holes into the measurement body. Therefore, using drilled holes is a very easy way to gain the advantages of holes in the measurement body mentioned above.

According to a second aspect of the invention, the object is solved by a turbine comprising a rotor, a housing and a device for a rotor thrust measurement. A turbine according to the invention is characterized in that the device is constructed according to the first aspect of the invention. The usage of such a device provides the same advantages which have been discussed above in detail according to the device according to the first aspect of the invention.

Further, a turbine according to the invention can be characterized in that the turbine comprises a thrust bearing with a radial bearing part and an axial bearing part and that the first part of the turbine and/or the second part of the turbine consists of the thrust bearing. A thrust bearing with a radial bearing part and an axial bearing part is a very common way to support a rotor of a turbine in the turbine housing. In most thrust bearings, the radial bearing part supports the rotor shaft radially but allows an axial movement of the rotor shaft, the axial bearing part supports the rotor shaft axially but allows a radial movement of the rotor shaft. Together, the radial bearing part and the axial bearing part respectively provide a support of the rotor shaft, both in radial and axial direction. The axial and the radial bearing part are directly connected to the rotor of the turbine via the rotor shaft. An axial movement of the rotor shaft due to an axial rotor thrust is therefore immediately transmitted to the respective bearing part. A usage of one or both bearing parts as first and/or second turbine part, which are connected by the first and second contact surfaces of the measurement body, allows therefore a very direct measurement of a movement of the rotor due to rotor thrust. A decline in measurement precision due to transmission losses can therefore be avoided.

According to a third embodiment of the invention the object is solved by a method to measure a rotor thrust of a turbine, using a device according to the first aspect of the invention. A method according to the invention comprises the following steps:
a) measuring strain data using the at least one strain gauge (30),
b) transmitting the measured strain data to the evaluation unit (11),
c) calculating the strain and stress distribution in the measurement body (20) by the evaluation unit (11), and
d) determining the rotor thrust using the calculated strain and stress distribution by the evaluation unit (11).

A method according to the invention is carried out using a device according to the first aspect of the invention. The usage of such a device to carry out the method provides therefore the same advantages, which have been discussed above in detail according to the device according to the first aspect of the invention.

In step a) of the method according to the invention, the strain data, reflecting the actual strain and stress distribution in the measurement body, is measured. The at least one strain gauge of the device according the first aspect of the invention is used for this purpose. Subsequently in step b) of the method according to the invention, the measured strain data is transmitted to the evaluation unit of the device. The transmission can be wire-bound or wireless. In the evaluation unit, the actual strain and stress distribution present in the measurement body is calculated in step c) of the method according to the invention. Models, look-up tables or similar methods can be used to calculate the actual strain and stress distribution out of the strain data measured by the at least one strain gauge. In the next step d) out of the calculated strain and stress distribution the rotor thrust can be calculated by the evaluation unit. Of course also for this purpose models, look-up tables or similar methods can be used by the evaluation unit. A method according to the invention therefore provides the actual present rotor thrust during the operation of the turbine. It is therefore possible, to alter the operation mode of the turbine if the axial thrust is too high and causes a danger of damage done, for instance to a bearing of the rotor. Therefore safety margins can be reduced and due to that the region of allowed operation of the turbine can be increased. Further, since the rotor thrust changes due to fluid losses, for instance due to a filling of deposits inside the turbine, such losses can be identified using the rotor thrust measurement provided by the device for a rotor thrust measurement of a turbine according to the invention.

In another especially preferred embodiment a method according to the invention can be characterized in that prior to step c) a temperature of the measurement body is measured, the temperature data is transmitted to the evaluation unit and this temperature data is used in step c) to calculate the strain and stress distribution in the measurement body. Due to temperature effects the measurement body can be additionally stretched or contracted. These effects are also measured by the at least one strain gauge. To consider these temperature induced effects, the temperature of the measurement body is measured and the temperature data is transmitted to the evaluation unit. In the evaluation unit, a consideration of a stretch and/or of a contraction of the measurement body due to changes in temperature can be calculated. Afterwards a consideration of the temperature induced effects during the calculation of a stress and strain distribution is possible. A stress and strain distribution in the measurement body exclusively caused by an axial rotor thrust can therefore be achieved. For instance, a stress and strain distribution is calculated based on the measured temperature and is subtracted from a stress and strain distribution calculated from the data provided by the at least one strain gauge. As a result a stress and strain distribution exclusively caused by the axial rotor thrust can be calculated. The precision of the calculated rotor thrust can therefore be enhanced.

The present invention is further described with respect to the accompanying figures. The figures show schematically:
- Fig. 1: a first embodiment of a device and a turbine according to the invention, and
- Fig. 2: a second embodiment of a device and a turbine according to the invention.

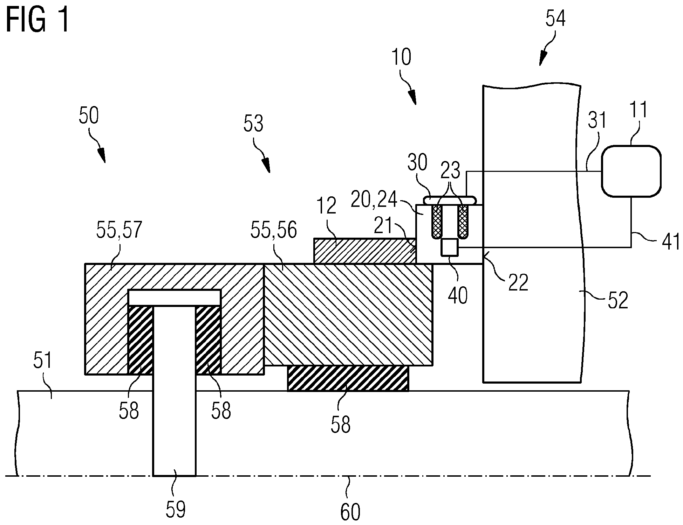

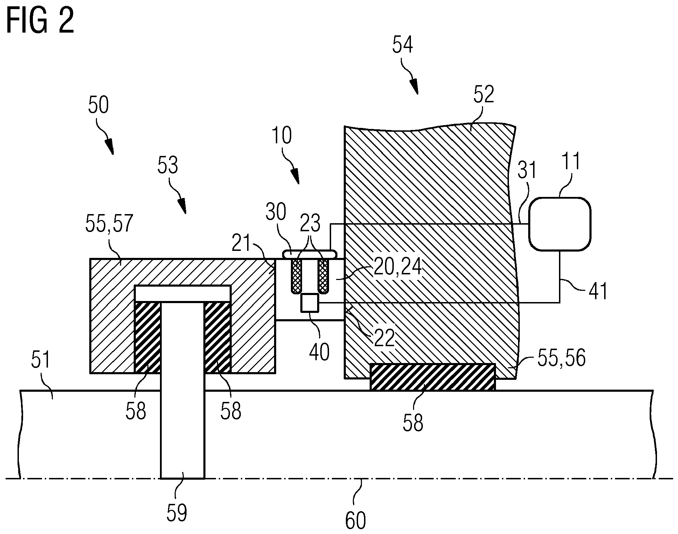

Elements having the same functions and mode of action are provided in figs. 1 and 2 with the same reference signs.

Fig. 1 shows a turbine 50 which comprises a device 10 according to the invention. A rotor 51 of the turbine 50 is supported by a thrust bearing 55 and can rotate about its rotor axis 60. The thrust bearing 55 is split into a radial bearing part 56 and an axial bearing part 57. In the radial bearing part 56, a tilting pad 58 is directly mounted on the rotor 51, in the axial bearing part a thrust collar 59 is provided for this purpose. The thrust bearing 55 is connected to a housing 52 of the turbine 50 (not shown). This connection allows a slight axial movement of the thrust bearing 55 in respect to the housing 52 to prevent a damaging of the rotor 51 and the turbine 50 as a whole due to an axial rotor thrust. Such an axial rotor thrust can occur for instance due to the impingement of the fluid flow within the turbine 50 on blades of a rotor blading (not shown) fixed to the rotor 51. A device 10 for a rotor thrust measurement according to the invention allows measuring this axial rotor thrust. A measurement body 20 is provided, in the embodiment shown it is designed as a ring 24, which is also especially arranged around the rotor axis 60 in a radial symmetric way. The measurement body 20 is fixed to the housing 52 and the thrust bearing 55 using a split ring 12. A split ring 12 allows fixing the measurement body 20 even after the assembly of the thrust bearing 55. The measurement body 20 comprises a first 21 and a second contact surface 22 to contact a first 53 and a second part 54 of the turbine 50 respectively. In this embodiment of a turbine 50, the second part 54 is directly formed by the housing 52, the first part 53 is formed by the split ring 12. The split ring 12 is mechanically connected to the thrust bearing 55 and further to the rotor 51. A relative movement of the rotor 51 and the housing 52 therefore directly exerts a force on the measurement body 20 causing a strain and stress distribution in the measurement body 20. To enhance and concentrate this strain and stress distribution, the measurement body comprises holes 23. Due to these holes 23, the change in length caused by the force of the axial rotor thrust is enlarged and therefore easier to measure. The actual measurement is done by a strain gauge 30. The measured strain data is transmitted via a first data connection 31 to an evaluation unit 11. A change in length of the measurement body 20 can also occur due to an influence of temperature. To rule out this source of length change, a temperature measuring device 40 is also provided at the measurement body 20. The measured temperature data is transmitted to the evaluation unit 11 using a second data connection 41. The data connections 31, 41 are shown as wires, of course also wireless data connection 31, 41 can be used. In the evaluation unit 11 the actual strain and stress distribution present in the measurement body 20 is calculated out of the measured data, both of the strain gauge 30 and the temperature measurement device 40. Models, look-up tables or similar methods can be used for this purpose. For instance, the temperature data can be used to calculate a stress and strain distribution in the measurement body 20 caused only by the temperature. This stress and strain distribution can then be subtracted from the stress and strain distribution measured by the strain gauge 30. Out of the calculated strain and stress distribution the rotor thrust can be calculated by the evaluation unit 11. Of course also for this purpose models, look-up tables or similar methods can be used by the evaluation unit 11. A turbine 50 and/or a device 10 according to the invention allow determining the actual present rotor thrust during the operation of the turbine 50. It is therefore possible, to alter the operation mode of the turbine 50 if the axial thrust is too high and causes a danger of damage done, for instance to the thrust bearing 55. Therefore safety margins can be reduced and due to that the region of allowed operation of the turbine 50 can be increased.

In fig.2 another embodiment of a turbine 50 according to the invention with a device 10 according to the invention is shown. In the following, especially the differences to the embodiment shown in fig. 1 are highlighted. All features not mentioned in the following are as described with respect to the embodiment shown in fig. 1. In the embodiment shown in fig. 2, the radial bearing part 56 of the thrust bearing 55 is integrated in the housing 52 of the turbine 50 and the axial bearing part 57 of the thrust bearing 55 is a separate building element. Therefore, if the rotor 51 is axially moving due to an axial rotor thrust, the axial bearing part 57 is moving with respect to the housing 52. The first part 53 is therefore formed by the axial bearing part 57 and the second part 54 by the housing 52 respectively. In this embodiment, no split ring 12 (not shown) is needed to fix the ring 24 which forms the measurement body 20 with its first 21 and second contact surface 22 between the first 53 and the second part 54 of the turbine 50 respectively. An axial movement of the rotor 51 causes a stress and strain distribution in the measurement body 20 which is enhanced by holes 23 in the measurement body 20. A strain gauge 30 is provided to measure this stress and strain distribution. A temperature measuring device 40 provides a temperature of the measurement body 20 to rule out stress and strain distributions induced by temperature. All measured data is transmitted via data connections 31, 41 to an evaluation unit 11. In the evaluation unit 11 the actual stress and strain distribution in the measurement body 20 is calculated, and further on based on this stress and strain distribution a value of the axial rotor thrust is determined.

## Claims

1. Device (10) configured to measure an axial rotor thrust of a turbine (50), the turbine (50) comprising a rotor (51), a thrust bearing (55) and a housing (52),
**characterized in that**
the device (10) comprises a measurement body (20) and an evaluation unit (11), wherein the measurement body (20) comprises a first contact surface (21) for contacting a first part (53) of the turbine (50) mechanically connected to the rotor (51), a second contact surface (22) for contacting a second part (54) of the turbine mechanically connected to the housing (52), at least one strain gauge (30) mechanically connected to the measurement body (20) and a first data connection (31) between the at least one strain gauge (30) and the evaluation unit (11).

2. Device according to claim 1,
**characterized in that**
the measurement body (20) is a ring (24), especially a solid ring (24).

3. Device (10) according to claim 1 or 2,
**characterized in that**
the measurement body (20) is fixed to the first (53) and/or second part (54) of the turbine (50) using a split ring (12).

4. Device (10) according to one of the preceding claims,
**characterized in that**
the device (10) comprises a temperature measurement device (40) to measure the temperature of the measurement body (20) and a second data connection (41) between the temperature measurement device (40) and the evaluation unit (11).

5. Device (10) according to one of the preceding claims,
**characterized in that**
the measurement body (20) comprises at least one hole (23), especially perpendicular to the at least one strain gauge (30) .

6. Device (10) according to claim 5,
**characterized in that**
the at least one hole (23) is a drilled hole (23).

7. Turbine (50) comprising a rotor (51), a housing (52) and a device (10) for a rotor thrust measurement,
**characterized in that**
the device (10) is constructed according to one of the preceding claims.

8. Turbine (50) according to claim 7,
**characterized in that**
the turbine (50) comprises a thrust bearing (55) with a radial bearing part (56) and an axial bearing part (57) and that the first part (53) of the turbine (50) and/or the second part (54) of the turbine (50) consists of the thrust bearing (55).

9. Method to measure a rotor thrust of a turbine (50) with a rotor (51), a thrust bearing (55) and a housing (52), using a device (10) according one of the claims 1 to 6, comprising the following steps:
a) measuring strain data using the at least one strain gauge (30),
b) transmitting the measured strain data to the evaluation unit (11),
c) calculating the strain and stress distribution in the measurement body (20) by the evaluation unit (11), and
d) determining the axial rotor thrust using the calculated strain and stress distribution by the evaluation unit (11).

10. Method according to claim 9,
**characterized in that**
prior to step c) a temperature of the measurement body (20) is measured, the temperature data is transmitted to the evaluation unit (11) and this temperature data is used in step c) to calculate the strain and stress distribution in the measurement body (20).

## Patentansprüche

1. Vorrichtung (10), welche zum Messen eines axialen Schublagers einer Turbine (50) konfiguriert ist, wobei die Turbine (50) einen Rotor (51), ein Schublager (55) und ein Gehäuse (52) umfasst,
**dadurch gekennzeichnet, dass**
die Vorrichtung (10) einen Messkörper (20) und eine Auswerteeinheit (11) umfasst, wobei der Messkörper (20) eine erste Kontaktfläche (21) für die Kontaktierung eines mechanisch mit dem Rotor (51) verbundenen ersten Teils (53) der Turbine (50), eine zweite Kontaktfläche (22) für die Kontaktierung eines mechanisch mit dem Gehäuse (52) verbundenen zweiten Teils (54) der Turbine, mindestens einen mechanisch mit dem Messkörper (20) verbundenen Dehnungsmessstreifen (30) und eine erste Datenverbindung (31) zwischen dem mindestens einen Dehnungsmessstreifen (30) und der Auswerteeinheit (11) umfasst.

2. Vorrichtung nach Anspruch 1,
**dadurch gekennzeichnet, dass**
der Messkörper (20) ein Ring (24) ist, insbesondere ein fester Ring (24).

3. Vorrichtung (10) nach Anspruch 1 oder 2,
**dadurch gekennzeichnet, dass**
der Messkörper (20) unter Verwendung eines Spaltrings (12) an dem ersten (53) und/oder zweiten Teil (54) der Turbine (50) befestigt ist.

4. Vorrichtung (10) nach einem der vorhergehenden Ansprüche,
**dadurch gekennzeichnet, dass**
die Vorrichtung (10) eine Temperaturmessvorrichtung (40) zum Messen der Temperatur des Messkörpers (20) und eine zweite Datenverbindung (41) zwischen der Temperaturmessvorrichtung (40) und der Auswerteeinheit (11) umfasst.

5. Vorrichtung (10) nach einem der vorhergehenden Ansprüche,
**dadurch gekennzeichnet, dass**
der Messkörper (20) mindestens ein Loch (23) aufweist, insbesondere senkrecht zu dem mindestens einen Dehnungsmessstreifen (30).

6. Vorrichtung (10) nach Anspruch 5,
**dadurch gekennzeichnet, dass**
das mindestens eine Loch (23) ein Bohrloch (23) ist.

7. Turbine (50), welche einen Rotor (51), ein Gehäuse (52) und eine Vorrichtung (10) für Rotorschubmessung umfasst,
**dadurch gekennzeichnet, dass**
die Vorrichtung (10) nach einem der vorhergehenden Ansprüche ausgebildet ist.

8. Turbine (50) nach Anspruch 7,
**dadurch gekennzeichnet, dass**
die Turbine (50) ein Schublager (55) mit einem Radiallagerteil (56) und einem Axiallagerteil (57) umfasst und dass der erste Teil (53) der Turbine (50) und/oder der zweite Teil (54) der Turbine (50) aus dem Schublager (55) besteht.

9. Verfahren zum Messen der Rotorschubkraft einer Turbine (50) mit einem Rotor (51), einem Schublager (55) und einem Gehäuse (52) unter Verwendung einer Vorrichtung (10) nach einem der Ansprüche 1 bis 6, welches die folgenden Schritte umfasst:
a) Messen von Dehnungsdaten unter Verwendung des mindestens einen Dehnungsmessstreifens (30),
b) Senden der gemessenen Dehnungsdaten an die Auswerteeinheit (11),
c) Berechnen der Spannungs- und Dehnungsverteilung in dem Messkörper (20) durch die Auswerteeinheit (11) und
d) Bestimmen der axialen Rotorschubkraft unter Verwendung der durch die Auswerteeinheit (11) berechneten Spannungs- und Dehnungsverteilung.

10. Verfahren nach Anspruch 9,
**dadurch gekennzeichnet, dass**
vor Schritt c) eine Temperatur des Messkörpers (20) gemessen wird, die Temperaturdaten an die Auswerteeinheit (11) gesendet werden und diese Temperaturdaten in Schritt c) verwendet werden, um die Spannungs- und Dehnungsverteilung in dem Messkörper (20) zu messen.

## Revendications

1. Dispositif (10) configuré pour mesurer une poussée axiale de rotor d'une turbine (50), la turbine (50) comprenant un rotor (51), un palier de butée (55) et un logement (52),
**caractérisé en ce que**
le dispositif (10) comprend un corps (20) de mesure et une unité (11) d'évaluation, dans lequel le corps (20) de mesure comprend une première surface (21) de contact pour un contact avec une première partie (53) de la turbine (50) mécaniquement connectée au rotor (51), une deuxième surface (22) de contact pour un contact avec une deuxième partie (54) de la turbine mécaniquement connectée au logement (52), au moins une jauge (30) de déformation mécaniquement connectée au corps (20) de mesure et une première connexion (31) de données entre l'au moins une jauge (30) de déformation et l'unité (11) d'évaluation.

2. Dispositif selon la revendication 1,
**caractérisé en ce que**
le corps (20) de mesure est un anneau (24), spécialement un anneau plein (24).

3. Dispositif (10) selon la revendication 1 ou 2,
**caractérisé en ce que**
le corps (20) de mesure est fixé à la première (53) et/ou à la deuxième (54) partie de la turbine (50) en utilisant un anneau brisé (12).

4. Dispositif (10) selon l'une des revendications précédentes,
**caractérisé en ce que**
le dispositif (10) comprend un dispositif (40) de mesure de température pour mesurer la température du corps (20) de mesure et une deuxième connexion (41) de données entre le dispositif (40) de mesure de température et l'unité (11) d'évaluation.

5. Dispositif (10) selon l'une des revendications précédentes,
**caractérisé en ce que**
le corps (20) de mesure comprend au moins un trou (23), spécialement perpendiculaire à l'au moins une jauge (30) de déformation.

6. Dispositif (10) selon la revendication 5,
**caractérisé en ce que**
l'au moins un trou (23) est un trou percé (23).

7. Turbine (50) comprenant un rotor (51), un logement (52) et un dispositif (10) pour une mesure de poussée de rotor,
**caractérisée en ce que**
le dispositif (10) est construit selon l'une des revendications précédentes.

8. Turbine (50) selon la revendication 7,
**caractérisée en ce que**
la turbine (50) comprend un palier de butée (55) avec une partie radiale (56) de palier et une partie axiale (57) de palier et **en ce que** la première partie (53) de la turbine (50) et/ou la deuxième partie (54) de la turbine (50) consiste(nt) en le palier de butée (55).

9. Procédé pour mesurer une poussée de rotor d'une turbine (50) avec un rotor (51), un palier de butée (55) et un logement (52), en utilisant un dispositif (10) selon l'une des revendications 1 à 6, comprenant les étapes suivantes :
a) mesure de données de déformation en utilisant l'au moins une jauge (30) de déformation,
b) transmission des données de déformation mesurées à l'unité (11) d'évaluation,
c) calcul de la distribution de déformation et de contrainte dans le corps (20) de mesure par l'unité (11) d'évaluation, et
d) détermination de la poussée axiale de rotor en utilisant la distribution de déformation et de contrainte calculée par l'unité (11) d'évaluation.

10. Procédé selon la revendication 9,
**caractérisé en ce que**
avant l'étape c), une température du corps (20) de mesure est mesurée, les données de température sont transmises à l'unité (11) d'évaluation et ces données de température sont utilisées à l'étape c) pour calculer la distribution de déformation et de contrainte dans le corps (20) de mesure.
